# EUROPEAN PATENT APPLICATION

(11) **EP 4 811 914 A1**
(43) Date of publication of application: **23.09.2026**
(21) Application number: 24895617.9
(22) Date of filing: 27.06.2024
(51) Int. Cl.: H04W 72/541

(54) **CELL NETWORK INTERFERENCE COORDINATION METHOD**

(30) Priority: 30.11.2023 CN 202311654020
(71) Applicant: ZTE CORPORATION, Shenzhen, Guangdong 518057 (CN)
(72) Inventor: ZHAN, Yong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/102081
(87) International publication number: WO 2025/112514

(57) **Abstract**

The present application provides a method for coordinating interference in a cell network. A target cell includes a first network and a second network; the method includes: obtaining a target allocation number allocated by the second network to the first network of the target cell during a preset period, a second network allocation number of each neighboring cell of the target cell during the preset period; in response to that the second network allocation number of any neighboring cell among neighboring cells is less than the target allocation number, determining a neighboring cell as an interference cell; determining an effective resource in an overlapping region between the target cell and the interference cell; and allocating the effective resource to a first network user in the overlapping region between the target cell and the interference cell.

## Description

### CROSS-REFERENCE TO RELATED APPLICATIONS

The present application claims priority to Chinese Patent Application No. 202311654020.6, filed on November 30, 2023, the entire disclosure of which is incorporated herein by reference.

### TECHNICAL FIELD

The present application relates to the technical field of network interference, and in particular to a method for coordinating interference in a cell network.

### BACKGROUND

In the field of mobile wireless networks, with the widespread adoption of various intelligent devices and the rapid growth of data services, how to efficiently utilize spectrum resources has become a current research focus. In order to satisfy the increasing data demand and improve network performance, a series of emerging technologies have continuously emerged. Among these technologies, intelligent dynamic spectrum sharing technologies, such as dynamic spectrum sharing (DSS) orchestration technology, have attracted significant attention and are regarded as promising solutions.

The DSS orchestration technology is intended to optimize deployment of radio access network services of cells on a single spectrum. Through DSS orchestration, a cell can flexibly and dynamically switch among multiple communication standards (such as 3G, 4G, and 5G), support simultaneous deployment of radio access network services of multiple communication standards, or provide services of only a single communication standard. This means that, according to real-time load ratio variations of users of different communication standards, the cell can dynamically adjust a state to adapt to service demand variations of different communication standards.

However, since service ratios of different communication standards may significantly differ among different cells, after the intelligent dynamic spectrum sharing technology is enabled, cell states among neighboring cells may fail to be aligned, thereby causing network signals (for example, 4G signals) of adjacent lower-capacity cells on the same frequency to generate severe interference to higher-capacity network signals (for example, 5G signals) of a local cell.

### SUMMARY

The present application provides a method for coordinating interference in the cell network, which can reduce interference from neighboring cells to the target cell.

The present application provides a method for coordinating interference in a cell network, which includes the following steps: obtaining a target allocation number allocated by the second network to the first network of the target cell of the preset period target spectrum sharing cell during a preset period, a second network allocation number of each neighboring cell of the target cell of the preset period target spectrum sharing cell during the preset period; in response to that the second network allocation number of any neighboring cell among neighboring cells is less than the target allocation number, determining the neighboring cell as an interference cell; determining an effective resource in an overlapping region between the target cell of the preset period target spectrum sharing cell and the interference cell; and allocating the effective resource to a first network user in the overlapping region between the target cell of the preset period target spectrum sharing cell and the interference cell.

### BRIEF DESCRIPTION OF THE DRAWINGS

To more clearly illustrate technical solutions in the embodiments of the present application, the following will briefly introduce the drawings that need to be used in the description of the embodiments. Obviously, the drawings in the following description are only some embodiments of the present application. For those skilled in the art, without creative effort, other drawings can be obtained according to the structures shown in these drawings.
FIG. 1 is a schematic flowchart of a method for coordinating interference in a cell network according to a first embodiment in the present application.
FIG. 2 is a schematic flowchart of a 4G and 5G spectrum sharing system.
FIG. 3 is a structural diagram illustrating cell distribution and mutual coverage relationships in the first scenario.
FIG. 4 is another structural diagram illustrating the cell distribution and mutual coverage relationships in the first scenario.
FIG. 5 is a structural diagram illustrating cell distribution and mutual coverage relationships in the second scenario.
FIG. 6 is another structural diagram illustrating the cell distribution and mutual coverage relationships in the second scenario.
FIG. 7 is a schematic structural diagram of an electronic device according to an embodiment in the present application.
FIG. 8 is a schematic structural diagram of a computer-readable storage medium according to an embodiment in the present application.

### DETAILED DESCRIPTION OF THE EMBODIMENTS

The technical solutions in the embodiments of the present application will be clearly and completely described below with reference to the accompanying drawings in the embodiments of the present application. It should be understood that the specific embodiments described herein are merely intended to explain the present application, rather than to limit the present application. In addition, for ease of description, only structures related to the present application, rather than all structures, are illustrated in the accompanying drawings. Based on the embodiments of the present application, all other embodiments obtained by those skilled in the art without creative efforts shall fall within the scope of the present application.

The term "embodiment" herein means that a particular feature, structure, or characteristic described in connection with the embodiment may be included in at least one embodiment of the present application. The appearances of this term at various places in the specification do not necessarily refer to the same embodiment, nor are they independent or alternative embodiments mutually exclusive with other embodiments. It is explicitly and implicitly understood by those skilled in the art that the embodiments described herein may be combined with other embodiments.

In the field of mobile wireless networks, with the widespread adoption of various intelligent devices and the rapid growth of data services, how to efficiently utilize spectrum resources has become a current research focus. In order to satisfy the increasing data demand and improve network performance, a series of emerging technologies have continuously emerged. Among these technologies, intelligent dynamic spectrum sharing technologies, such as dynamic spectrum sharing (DSS) orchestration technology, have attracted significant attention and are regarded as promising solutions.

The DSS orchestration technology is intended to optimize deployment of radio access network services of cells on a single spectrum. Through DSS orchestration, a cell can flexibly and dynamically switch among multiple communication standards (such as 3G, 4G, and 5G), support simultaneous deployment of radio access network services of multiple communication standards, or provide services of only a single communication standard. This means that, according to real-time load ratio variations of users of different communication standards, the cell can dynamically adjust a state to adapt to service demand variations of different communication standards.

However, since service ratios of different communication standards may significantly differ among different cells, after the intelligent dynamic spectrum sharing technology is enabled, cell states among neighboring cells may fail to be aligned, thereby causing network signals (for example, 4G signals) of adjacent lower-capacity cells on the same frequency to generate severe interference to higher-capacity network signals (for example, 5G signals) of a local cell.

Accordingly, in order to solve the technical problem in the related art that, after the intelligent dynamic spectrum sharing technology is enabled, network signals (for example, 4G signals) of adjacent lower-capacity cells on the same frequency cause severe interference to higher-capacity network signals (for example, 5G signals) of a local cell, the present application provides a method for coordinating interference in a cell network. Some embodiments are described below.

Some technical terms involved in the present application are first explained as follows.

Multicast Broadcast Single Frequency Network (MBSFN): a multicast/broadcast single frequency network.

Cell-specific Reference Signal Muting (CRSMuting): significantly reducing transmission power of a 4G CRS signal on designated resource blocks.

Channel State Information-Interference Measurement (CSI-IM): a technology for measuring wireless signal interference.

New Radio (NR): a new radio technology, namely, 5G.

Long Term Evolution (LTE): long-term evolution, namely, 4G.

Cell Reference Signal (CRS): a cell reference signal.

Dynamic Spectrum Sharing (DSS): dynamic spectrum sharing.

Physical Downlink Shared Channel (PDSCH): a physical downlink shared channel.

Physical Resource Block (PRB): a physical resource block, which is referred to as an RB in the embodiments of the present application.

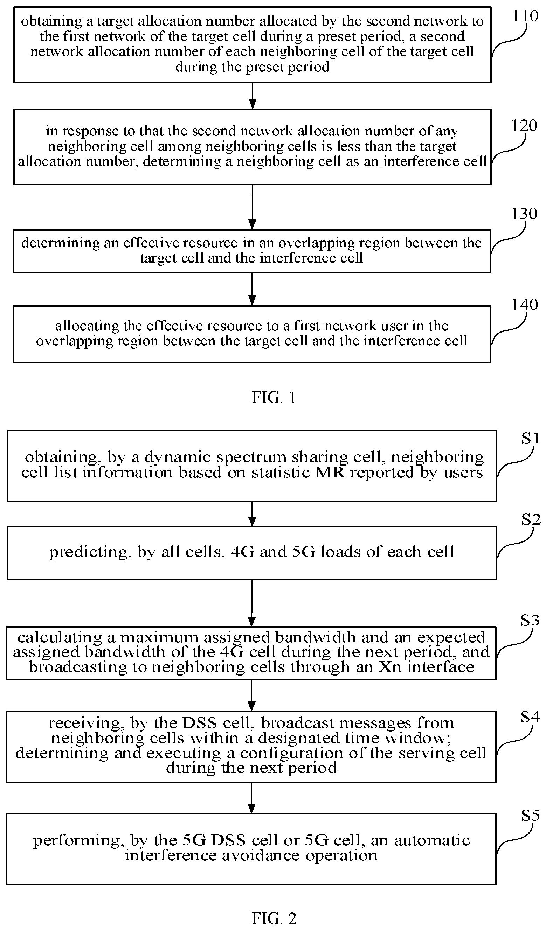

The method for coordinating interference in a cell network in the present application will be described in detail below. As shown in FIG. 1. FIG. 1 is a schematic flowchart of a method for coordinating interference in a cell network according to a first embodiment in the present application. The method includes the following steps.

Step 110, obtaining a target allocation number allocated by the second network to the first network of the target cell during a preset period, a second network allocation number of each neighboring cell of the target cell during the preset period.

The target cell is a dynamic spectrum sharing (DSS) cell. For convenience of description, in the embodiments of the present application, the dynamic spectrum sharing cell is referred as the DSS cell. The target cell includes a first network and a second network. The first network may be 3G, 4G, 5G, or the like, and the second network may also be 3G, 4G, 5G, or the like. It should be noted that a capacity of the first network is greater than a capacity of the second network. For example, if the first network is 5G, then the second network is 4G; or if the first network is 4G, then the second network is 3G.

In addition, the target cell may be divided into different regions according to networks used. For example, a region using the first network is referred to as a first network region, and a region using the second network is referred to as a second network region.

The neighboring cell may include a DSS cell and/or a single-network cell.

For example, the target cell may be the DSS cell 1, and the neighboring cells may include the DSS cell 2, the single-network cell 1, and the single-network cell 2. Alternatively, the target cell may be the DSS cell 1, and the neighboring cell may be the DSS cell 2.

In some embodiments, the preset period may be a next period, that is, a next time period following a current period. A specific time may be set according to actual requirements. In the embodiments of the present application, the preset period being the next period is taken as an example for illustration.

In addition, the target allocation number refers to an allocation number that can be allocated by the second network to the first network in the target cell during the preset period. For example, when a total number of second network configurations of the target cell during the preset period is 10, and a desired total number of second network configurations of the target cell during the preset period is 3, the number that can be allocated by the second network to the first network in the target cell during the preset period is 7. That is, the target allocation number is related to the total number of second network configurations of the target cell and the desired total number of second network configurations of the target cell.

Similarly, a calculation manner of the second network allocation number is the same as that of the target allocation number.

In some embodiments, the target allocation number may be transmitted and received through broadcasting or other wireless transmission manners. Specifically, after determining that an expected bandwidth of the target cell during a next period is greater than 0, the target cell transmits mandatory and/or non-mandatory expected bandwidth broadcast information to each neighboring cell; and within a preset time, the target cell receives respective second network allocation numbers determined and fed back by the neighboring cells based on the broadcast information.

The target cell may additionally attach a "mandatory" label or a "non-mandatory" label to the transmitted broadcast information. The "mandatory" label indicates that the neighboring cells are required to cooperate unconditionally. In general scenarios, use of the "non-mandatory" label is recommended, while the "mandatory" label may be used in special scenarios. Similarly, when a neighboring cell of the target cell is a DSS cell, and an expected bandwidth of the neighboring cell during the next period is greater than 0, broadcast information may also be transmitted to other neighboring cells corresponding the neighboring cell.

In some embodiments, the target allocation number of the target cell during the preset period may be determined by following steps: obtaining a maximum assigned bandwidth and an expected assigned bandwidth of the target cell during the preset period, and obtaining an expected assigned bandwidth of a neighboring cell during the preset period; and determining the target allocation number of the target cell during the preset period based on the maximum assigned bandwidth and the expected assigned bandwidth of the target cell during the preset period, and the expected assigned bandwidth of the neighboring cell during the preset period.

The maximum assigned bandwidth of the target cell refers to a maximum bandwidth of the second network cell that can be assigneded for a first network user to use.

The maximum assigned bandwidth of the target cell during a next period may be obtained in the following manner.
(1) A configuration bandwidth of the second network of the target cell and an expected bandwidth of a second network user during the next period are obtained.
(2) The maximum assigned bandwidth of the target cell during the next period is determined based on a difference value between the configuration bandwidth of the second network and the expected bandwidth of the second network user during the next period.

Specifically, reference may be made to Formula 1: max (configuration bandwidth of the second network-expected bandwidth of the second network user during the next period, 0).

For example, when the configuration bandwidth of the second network is 10M, and the expected bandwidth of the second network user during the next period is 6M, the difference value between the configuration bandwidth of the second network and the expected bandwidth of the second network user during the next period is 4M, and thus the maximum assigned bandwidth = max (4M,0) = 4M.

Based on the obtained maximum assigned bandwidth, the expected assigned bandwidth may be further determined. Specifically, reference may be made to the following process.
1) obtaining an expected bandwidth and a first dedicated network bandwidth of a first network user during the preset period;
2) determining a difference value between the expected bandwidth and the first dedicated network bandwidth of the first network user during the preset period; and
3) based on the difference value between the expected bandwidth and the first dedicated network bandwidth of the first network user during the preset period, and the maximum assigned bandwidth of the target cell during the preset period, obtaining the expected assigned bandwidth of the target cell during the preset period.

For processes 1)-3), reference may be made to Formula 2: min (max (expected bandwidth of the first network user during the next period -first dedicated network bandwidth, 0), max (configuration bandwidth of the second network - expected bandwidth of the second network user during the next period, 0).

The formula of "max (configuration bandwidth of the second network - expected bandwidth of the second network user during the next period, 0)" is the calculation formula of the above-mentioned maximum assigned bandwidth.

For example, when the expected bandwidth of the first network user during the next period is 7M, the first dedicated network bandwidth is 5M, and the maximum assigned bandwidth is 4M as calculated above, the expected assigned bandwidth = min (max (7M - 5M, 0), 4M) = 2M.

In some embodiments, after the assigned bandwidth is obtained, a corresponding bandwidth needs to be converted into a subframe number corresponding to a preset service and a target resource number corresponding to a preset reference signal. A specific conversion process may refer to the following description.

First, if an interference coordination system only supports a preset service configuration, the maximum assigned bandwidth and the expected assigned bandwidth of the target cell during the next period are respectively converted into a maximum subframe number and an expected subframe number corresponding to a preset service of the target cell; and the expected assigned bandwidth of the neighboring cell during the next period is converted into an expected subframe number corresponding to the preset service of the neighboring cell. The target allocation subframe number corresponding to the preset service of the target cell is determined based on the maximum subframe number and the expected subframe number corresponding to the preset service of the target cell, and the expected subframe number corresponding to the preset service of the neighboring cell.

Since the multicast broadcast single frequency network (MBSFN) subframe is a special subframe used for multicast/broadcast single-frequency network transmission, and can eliminate interference caused by CRS of adjacent same-frequency 4G cells to a 5G PDSCH of a local cell while retaining the capability of dynamically sharing the same spectrum resource between 4G and 5G, the preset service configuration may be the MBSFN configuration. For convenience of description, in the embodiments of the present application, the preset service configuration is referred as the MBSFN configuration.

In addition, since MBSFN is generally configured over an entire spectrum in integer subframes, the above-mentioned bandwidth may be converted into the MBSFN subframe number and then may be rounded down.

For example, a bandwidth of 10M may approximately correspond to 5 MBSFN subframes.

In some embodiments, determining the target allocation subframe number corresponding to the preset service may specifically include: selecting a larger subframe number among the expected subframe number of the target cell during the preset period and the expected subframe number of the neighboring cell during the preset period as a target expected subframe number; and selecting a smaller subframe number among the target expected subframe number and the maximum subframe number of the target cell during the preset period as a target allocation subframe number corresponding to the preset service of the target cell during the preset period.

Specific calculation of the target allocation subframe number may refer to Formula 3: max (min (maximum subframe number of the target cell during the next period, max (expected subframe number of the target cell during the next period, expected subframe number of the neighboring cell during the next period).

For example, if the expected subframe number of the target cell during the next period is 2, the expected subframe number of the neighboring cell during the next period is 3, and the maximum subframe number of the target cell is 4, then the target allocation subframe number = max (min (maximum subframe number of the target cell during the next period, max ((expected subframe number of the target cell during the next period), max (expected subframe number of the neighboring cell during the next period)))) = max (min (4, max (2, max (3)))) = three MBSFN subframes.

Secondly, if the interference coordination system only supports a preset reference signal configuration, the maximum assigned bandwidth and the expected assigned bandwidth of the target cell during the next period are respectively converted into a maximum resource number and an expected resource number corresponding to the preset reference signal of the target cell; and the expected assigned bandwidth of the neighboring cell during the next period is converted into an expected resource number corresponding to the preset reference signal of the neighboring cell. The target resource number of the preset reference signal of the target cell is determined based on the maximum resource number and the expected resource number corresponding to the preset reference signal of the target cell, and the expected resource number corresponding to the preset reference signal of the neighboring cell.

Since the CRSMuting technology can eliminate signal interference, the preset reference signal may be the CRS signal. The preset reference signal configuration may be the CRSMuting configuration.

The bandwidth may be converted into the resource number corresponding to the preset reference signal according to a proportional relationship of 3 times, 4 times, or 5 times, preferably 5 times.

For example, if the maximum assigned bandwidth of the target cell during the next period is 7M, the converted maximum resource number corresponding to the preset reference signal of the target cell is 35M; if the expected assigned bandwidth of the target cell during the next period is 3M, the converted expected resource number corresponding to the preset reference signal of the target cell is 15M.

Similarly, the expected resource number corresponding to the preset reference signal of the neighboring cell may be converted according to the same proportion as that of the target cell.

The target resource number of the preset reference signal of the target cell during the next period may refer to Formula 4: max (min(maximum resource number corresponding to the preset reference signal of the target cell during the next period, max (expected resource number corresponding to the preset reference signal of the target cell during the next period, max (expected resource number corresponding to the preset reference signal of the neighboring cell during the next period)))).

For example, if the expected resource number of the target cell during the next period is 15, the expected resource number of the neighboring cell during the next period is 0, and the maximum resource number of the target cell is 40, then the target resource number = max (min (40, max (15, max (0)))) = 15 RBs.

Thirdly, if the interference coordination system simultaneously supports the preset service configuration and the preset reference signal configuration, the maximum assigned bandwidth and the expected assigned bandwidth of the target cell during the next period are converted into the subframe number corresponding to the preset service, and then are rounded down, so as to obtain remaining maximum assigned bandwidth and remaining expected assigned bandwidth; the remaining maximum assigned bandwidth and remaining expected assigned bandwidth are further converted into the resource number corresponding to the preset reference signal; in the same network, allocation methods of the preset service configuration and the preset reference signal configuration are integrated.

For example, if the expected assigned bandwidth of the target cell during the next period is 14M, according to the computation rule that 10M bandwidth approximately corresponds to 5 MBSFN subframes, the 14M bandwidth may be converted into 5 MBSFN subframes, and a remaining expected assigned bandwidth is 4M. The remaining expected assigned bandwidth of 4M may then be converted into a resource number corresponding to the preset reference signal, such as 20 RBs.

In the embodiment, by first converting the maximum assigned bandwidth and the expected assigned bandwidth of the target cell into the subframe number corresponding to the preset service, it may be ensured that sufficient bandwidth is allocated to the preset service within limited wireless resources, so as to ensure preferential allocation and processing of the preset service and thereby guarantee service quality. Subsequently, by converting the remaining maximum assigned bandwidth and remaining expected assigned bandwidth into the resource number corresponding to the preset reference signal, stability and accuracy of the reference signal may be ensured, thereby guaranteeing overall network performance and further improving resource utilization.

In addition, since the allocation methods of the preset service configuration and the preset reference signal configuration are integrated in the same network, for example, by aligning the MBSFN configuration and the CRSMuting configuration between adjacent same-frequency cells, interference caused by the preset reference signal of the neighboring cell may be completely eliminated.

Step 120, in response to that the second network allocation number of any neighboring cell among neighboring cells is less than the target allocation number, determining a neighboring cell as an interference cell.

When the second network allocation number of the neighboring cell is smaller than the target allocation number, it means that the neighboring cell has relatively fewer wireless resources allocated thereto, which may lead to insufficient resource utilization and thereby cause relatively strong interference to the target cell. For example, the interference cell may adopt relatively high transmission power due to limited resources, thereby increasing interference; or improper resource allocation may result in low transmission efficiency and affect network performance.

By determining the neighboring cell as the interference cell, corresponding interference coordination and management measures may be taken to reduce an impact of the interference cell on the target cell. For example, a resource allocation strategy of the target cell may be adjusted to avoid or reduce interference caused by the interference cell, thereby improving performance of the target cell and ensuring communication quality of users in the target cell and overall network performance.

Step 130, determining an effective resource in an overlapping region between the target cell and the interference cell.

An interference resource caused by the interference cell to the target cell may be determined based on the second network allocation number of the interference cell and a total number of second network configurations of the interference cell; and the interference resource is excluded from a configuration bandwidth of the second network of the target cell, so as to obtain the effective resource in the overlapping region between the target cell and the interference cell.

Step 140, allocating the effective resource to a first network user in the overlapping region between the target cell and the interference cell.

For steps 130 and 140, for example, if the second network allocation number of the interference cell is 4M, the total number of second network configurations of the interference cell is 20M, and the total number of second network configurations of the target cell is 22M, then the interference resource caused by the interference cell to the target cell is 16M, and the effective resource in the overlapping region between the target cell and the interference cell is 22M - 16M = 6M.

Resources required by the first network user in the overlapping region between the target cell and the interference cell may then be selected from the effective resource of 6M for allocation.

According to the embodiment, by obtaining the target allocation number allocated by the second network to the first network in the target cell, and the second network allocation number of the neighboring cell, spectrum allocation conditions of respective cells may be clearly understood. When it is identified that the second network allocation number of any neighboring cell is smaller than the target allocation number, the corresponding neighboring cell is marked as the interference cell, and a region in which the target cell suffers strong interference is specifically identified. By further determining the effective resource in the overlapping region between the target cell and the interference cell, when allocating resources to the first network user in the target cell, resources may be selected and allocated from the effective resource for the first network user in the strongly interfered region, namely, the overlapping region. In other words, resources affected by the interference cell are avoided, thereby effectively alleviating severe interference caused in the related art due to service ratio differences among cells and state misalignment after the intelligent dynamic spectrum sharing technology is enabled.

In other embodiments, since a region of the target cell far away from the interference cell, namely a non-overlapping region between the target cell and the interference cell, is less affected or even not affected by the interference cell, the interference resource may be allocated to the region far away from the interference cell, such that all allocated resources are utilized as much as possible, thereby improving resource utilization of the target cell.

The interference resource and/or the effective resource may be allocated to a first network user in the non-overlapping region between the target cell and the interference cell.

For example, required resources may be selected from the effective resource of 6M and/or the interference resource of 16M for allocation to the first network user in the non-overlapping region between the target cell and the interference cell.

According to the embodiment, by identifying the interference cell and distinguishing overlapping regions and non-overlapping regions between the target dynamic spectrum sharing cell and the interference cell, namely, an interfered region and a non-interfered region, resources may be selectively allocated from different resources for different regions, thereby enabling flexible resource allocation and improving resource utilization of the target cell.

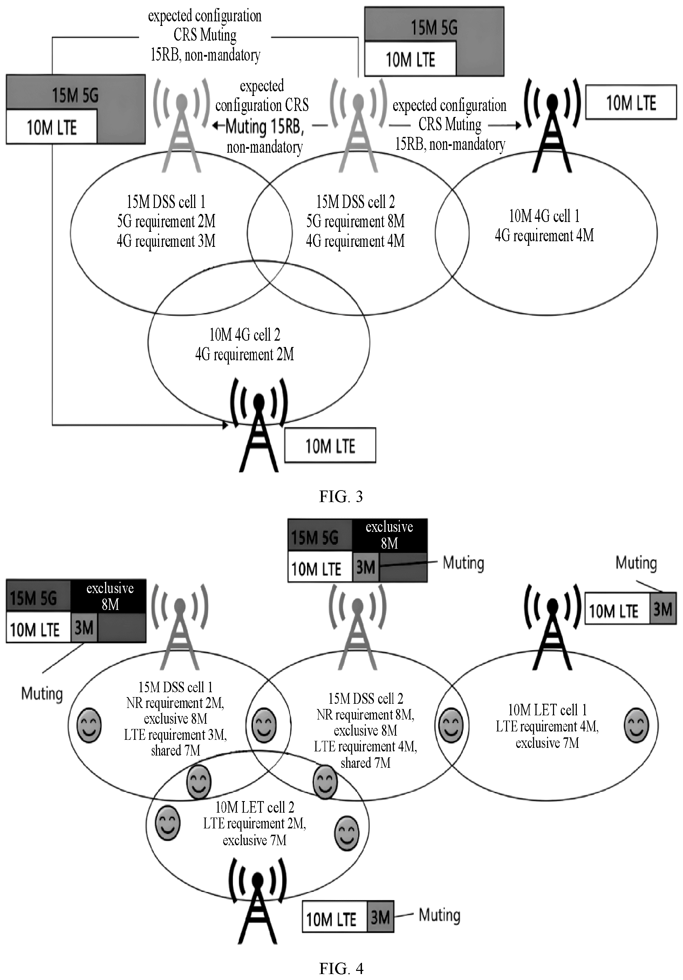

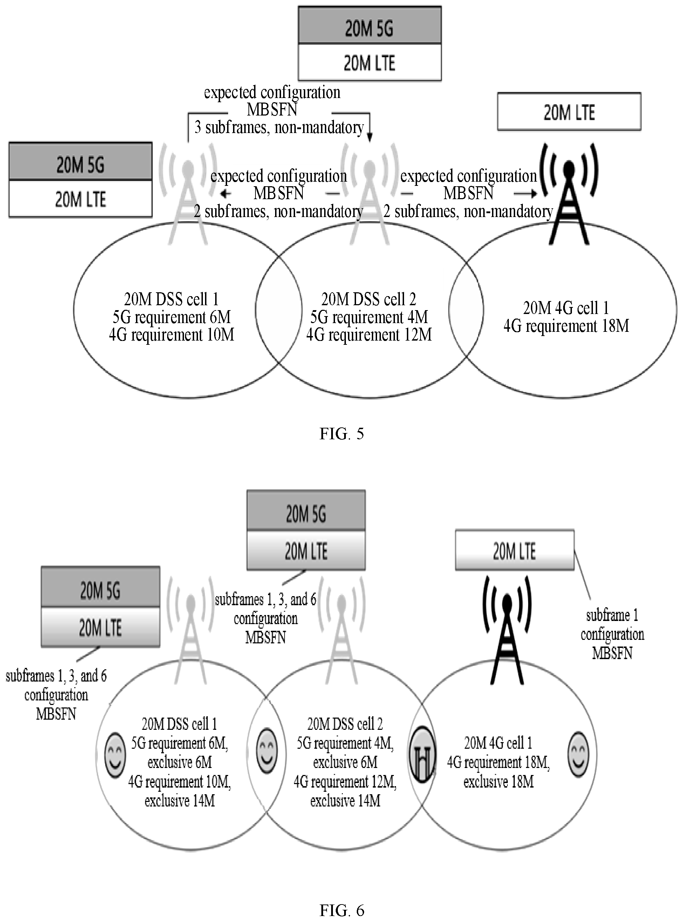

In conjunction with the above embodiments, by taking an application scenario of 4G and 5G spectrum sharing as an example, with reference to FIG. 2 to FIG. 6. FIG. 2 is a schematic flowchart of a 4G and 5G spectrum sharing system. FIG. 3 and FIG. 4 are structural diagrams illustrating cell distribution and mutual coverage relationships in the first scenario. FIG. 5 and FIG. 6 are structural diagrams illustrating cell distribution and mutual coverage relationships in the second scenario.

First scenario 1: it is assumed that the interference coordination system only supports the CRSMuting configuration, but does not support the MBSFN configuration.

S1, obtaining, by a dynamic spectrum sharing cell, neighboring cell list information based on statistical data reported by users.

As shown in FIG. 3, the dynamic spectrum sharing cells include 15M DSS cell 1 and 15M DSS cell 2. The 15M DSS cell 1 and 15M DSS cell 2 may be used as target cells.

A neighboring cell list of 4G DSS cell 1 (belonging to 15M DSS cell 1) includes: 4G DSS cell 2 (belonging to 15M DSS cell 2) and 10M 4G cell 2.

A neighboring cell list of 4G DSS cell 2 (belonging to 15M DSS cell 2) includes: 4G DSS cell 1 (belonging to 15M DSS cell 1), 10M 4G cell 1, and 10M 4G cell 2.

The neighboring cells in the neighboring cell list refer to same-frequency neighboring cells with high interference.

S2, predicting, by all cells, 4G and 5G loads of each cell.

As shown in FIG. 3, 15M DSS cell 1 and 15M DSS cell 2 are dynamic spectrum sharing cells. 15M DSS cell 1 includes 4G DSS cell 1 and 5G DSS cell 1. The 15M DSS cell 2 includes 4G DSS cell 2 and 5G DSS cell 2, while 10M 4G cell 1 and 10M 4G cell 2 are single-network cells.

It is assumed that bandwidth demands of 4G and 5G users in all cells during a next period are as shown in FIG. 3.

The bandwidth demand is the expected bandwidth. The 4G DSS cell 1 requires a bandwidth of 3M; 5G DSS cell 1 requires a bandwidth of 2M; 4G DSS cell 2 requires a bandwidth of 4M; 5G DSS cell 2 requires a bandwidth of 8M; 10M 4G cell 1 requires a bandwidth of 4M; and 10M 4G cell 2 requires a bandwidth of 2M.

S3, calculating a maximum assigned bandwidth and an expected assigned bandwidth of the 4G cell during the next period, and broadcasting to neighboring cells through an Xn interface.

As shown in FIG. 3, the 4G cells include 4G DSS cell 1, 4G DSS cell 2, 10M 4G cell 1, and 10M 4G cell 2.

The maximum assigned bandwidth and the expected assigned bandwidth of the 4G cell during the next period may be further converted into corresponding CRSMuting resource numbers, and then may be broadcast to neighboring cells through the Xn interface.

The maximum assigned bandwidth refers to a maximum bandwidth that the 4G cell can assigned for a 5G DSS user to use.

As shown in FIG. 3 and FIG. 4, 10M LTE indicates that a 4G configuration bandwidth is 10M; 15M 5G indicates that a 5G configuration bandwidth is 15M; NR demand indicates that an expected bandwidth of a 5G user during the next period is 2M; and LTE demand indicates that an expected bandwidth of a 4G user during the next period.

Based on Equation 1 for calculating the maximum assigned bandwidth: max (4G configuration bandwidth - expected bandwidth of the 4G user during the next period, 0), the maximum assigned bandwidths of respective cells during the next period may be calculated as follows.

The maximum assigned bandwidth of 4G DSS cell 1 in 15M DSS cell 1 during the next period is: max (10-3,0) = 7M bandwidth, which approximately corresponds to 35 RBs.

The maximum assigned bandwidth of 4G DSS cell 2 in 15M DSS cell 2 during the next period is: max (10-4,0) = 6M bandwidth, which approximately corresponds to 30 RBs.

The maximum assigned bandwidth of 10M 4G cell 1 during the next period is: max (10-4,0) = 6M bandwidth, which approximately corresponds to 30 RBs.

The maximum assigned bandwidth of 10M 4G cell 2 during the next period is: max (10-2,0) = 8M bandwidth, which approximately corresponds to 40 RBs.

In the 4G and 5G dynamic spectrum sharing scenario, the expected assigned bandwidth refers to a bandwidth expected by the 5G DSS to be obtained from the 4G or 4G DSS cell. Since a single-network 4G cell, such as 10M 4G cell 1 and 10M 4G cell 2, does not include 5G, only dynamic spectrum sharing cells, such as 15M DSS cell 1 and 15M DSS cell 2, need to be considered when calculating the expected assigned bandwidth.

Based on the above-calculated maximum assigned bandwidths corresponding to 4G DSS cells in the dynamic spectrum sharing cells, and Equation 2 for calculating the expected assigned bandwidth during the next period: min (max (expected bandwidth of the 5G user during the next period - 5G dedicated bandwidth, 0), max(4G configuration bandwidth - expected bandwidth of the 4G user during the next period, 0)), the expected assigned bandwidths of the 4G DSS cells in the dynamic spectrum sharing cells during the next period may be respectively calculated as follows.

As shown in FIG. 3 and FIG. 4, the 5G configuration bandwidths of 5M DSS cell 1 and 5M DSS cell 2 are both 15M, and the 4G configuration bandwidths are both 10M. Accordingly, the dedicated 5G bandwidths of 5M DSS cell 1 and 5M DSS cell 2 are both 5M.

The expected assigned bandwidth of 4G DSS cell 1 (belonging to 15M DSS cell 1) during the next period is: min (max (2-5,0), max (10-3,0)) = 0M, and a corresponding expected CRSMuting resource number is also 0.

The expected assigned bandwidth of 4G DSS cell 2 (belonging to 15M DSS cell 2) during the next period is: min (max (8-5,0), max (10-4,0)) = 3M, and a corresponding expected CRSMuting resource number may be 15 RBs.

Since the expected CRSMuting resource number of 4G DSS cell 1 during the next period is 0, no demand needs to be broadcast in the current period. Since the expected CRSMuting resource number of 4G DSS cell 2 (belonging to 15M DSS cell 2) during the next period may be 15 RBs, which is greater than 0, 4G DSS cell 2 needs to transmit a broadcast message, for example, "expected configuration of 15 RBs, non-mandatory", to all neighboring cells, namely, 4G DSS cell 1 (belonging to 15M DSS cell 1), 10M 4G cell 1, and 10M 4G cell 2.

S4, receiving, by the 4G or 4G DSS cell, broadcast messages from neighboring cells within a designated time window; determining and executing a configuration during the next period.

The configuration during the next period is a CRSMuting configuration, namely, calculation of a target resource number of a preset reference signal. Reference may be made to Equation 5: max (min (maximum tolerable CRSMuting resource number of the local cell during the next period, max (expected CRSMuting resource number of the local cell during the next period, max (expected CRSMuting resource number marked as non-mandatory received from neighboring cells during the next period))), max (expected CRSMuting resource number marked as mandatory received from neighboring cells during the next period)).

The maximum tolerable CRSMuting resource number is the above-mentioned maximum resource number corresponding to the preset reference signal, and the expected CRSMuting resource number is the expected resource number corresponding to the preset reference signal.

From the calculation results obtained in the foregoing steps, it can be known that the expected CRSMuting resource number of 4G DSS cell 1 during the next period is 0, and the expected CRSMuting resource number of 4G DSS cell 2 (belonging to 15M DSS cell 2) during the next period may be 15 RBs.

When calculating the target resource number for CRS Muting of the 4G DSS cell 1 (belonging to the 15M DSS cell 1), the serving cell is the 4G DSS cell 1, and the neighboring cells are the 4G DSS cell 2 (belonging to the 15M DSS cell 2) and the 10M4G cell 2.

As shown in FIG. 4, the LTE requirement (that is, the expected 4G bandwidth during the next period) of the 4G DSS cell 1 (belonging to the 15M DSS cell 1) is 3M, and the 4G configuration bandwidth is 10M. Accordingly, the maximum assigned bandwidth of the 4G DSS cell 1 during the next period is 7M, approximately equal to 35 RBs. Therefore, the target resource number for CRS Muting of the 4G DSS cell 1 (belonging to the 15M DSS cell 1) is: = max (min (35, max (0, max(15))), max(0)) = 15 RB.

When calculating the target resource number for CRS Muting of the 4G DSS cell 2 (belonging to the 15M DSS cell 2), the serving cell is the 4G DSS cell 2, and the neighboring cells are the 4G DSS cell 1 (belonging to the 15M DSS cell 1), the 10M4G cell 1, and the 10M4G cell 2.

As shown in FIG. 4, the LTE requirement (that is, the expected 4G bandwidth during the next period) of the 4G DSS cell 2 (belonging to the 15M DSS cell 2) is 4M, and the 4G configuration bandwidth is 10M. Accordingly, the maximum assigned bandwidth of the 4G DSS cell 2 during the next period is 6M, approximately equal to 30 RBs. Therefore, the target resource number for CRS Muting of the 4G DSS cell 2 (belonging to the 15M DSS cell 2) = max (min (30, max (15, max (0))), max(0)) = 15 RB.

Similarly, the target resource number for CRS Muting of the 10M4G cell 1 may be obtained as follows: target resource number = max (min (30, max(0, max(15))), max(0))=15 RB.

The target resource number for CRS Muting of the 10M4G cell 2 may be obtained as follows: target resource number = max (min(40, max (0, max (15))), max(0)) = 15 RB.

The calculated target resource number for CRS Muting is the target resource number of the preset reference signal.

After the calculation is completed, the above cells perform CRS Muting operations during the next period according to the above calculation results. It should be noted that the 15 RBs required for CRS Muting herein are the RBs adjacent to the 5G dedicated spectrum, and are aligned across the entire network.

S5, performing, by the 5G DSS cell or 5G cell, an automatic interference avoidance operation.

As shown in FIG. 4, all 4G cells and 4G DSS cells are configured with CRS Muting for 15 RBs, that is, the target allocation number allocated by the second network to the first network in the target cell 15M DSS cell 2 during the next period may be 15 RBs. The second network allocation numbers of the neighboring cells of the 4G DSS cell 2, namely, the 15M DSS cell 1, the 10M4G cell 1, and the 10M4G cell 2, during the next period are also 15 RBs. Therefore, on these 15 RBs, all 5G users in the target cell 15M DSS cell 2 are unlikely to detect strong interference, and the 5G users in the 15M DSS cell 2 may enjoy approximately 8M of clean spectrum bandwidth, thereby sufficiently satisfying their service requirements.

In the above first scenario, the target cell is not subject to interference from neighboring cells. Therefore, 5G users at all locations in the target cell 15M DSS cell 2 may enjoy approximately 8M of clean spectrum bandwidth. However, when the calculated second network allocation number of any neighboring cell is smaller than the target allocation number, an interference cell needs to be identified, and the locations of the 5G users in the target cell need to be distinguished. Details may be referred to in the second scenario 2.

Second scenario: it is assumed that the interference coordination system only supports MBSFN configuration and does not support CRS Muting configuration.

S1, obtaining, by the dynamic spectrum sharing cell, neighboring cell list information based on statistical data reported by users.

As shown in FIG. 5, the neighboring cell list of the 4G DSS cell 1 (belonging to the 20M DSS cell 1) includes the 4G DSS cell 2 (belonging to the 20M DSS cell 2), that is, the 20M DSS cell 1 and the 20M DSS cell 2 may be used as target cells.

The neighboring cell list of the 4G DSS cell 2 (belonging to the 20M DSS cell 2) includes the 4G DSS cell 1 (belonging to the 20M DSS cell 1) and the 20M4G cell 1.

The neighboring cells in the neighboring cell list refer to same-frequency neighboring cells having high interference.

S2, predicting, by all cells, 4G and 5G loads of each cell.

It is assumed that the bandwidth requirements of 4G users and 5G users during a next period for all cells are as shown in FIG. 6:
the 4G DSS cell 1 (belonging to the 20M DSS cell 1): 10M bandwidth;
the 5G DSS cell 1 (belonging to the 20M DSS cell 1): 6M bandwidth;
the 4G DSS cell 2 (belonging to the 20M DSS cell 2): 12M bandwidth;
the 5G DSS cell 2 (belonging to the 20M DSS cell 2): 4M bandwidth; and
the 20M4G cell 1: 18M bandwidth.

S3, calculating maximum assigned bandwidth and an expected assigned bandwidth of the 4G cell during the next period; broadcasting to neighboring cells through the Xn interface.

As shown in FIG. 5, the 4G cells include the 4G DSS cell 1, the 4G DSS cell 2, and the 20M4G cell 1.

The maximum assigned bandwidth and the expected assigned bandwidth of the 4G cell during the next period may be further converted into a corresponding MBSFN subframe number and then may be broadcast to neighboring cells through the Xn interface.

Based on the calculation Formula 1 of the maximum assigned bandwidth, namely, max (4G configuration bandwidth - expected bandwidth of 4G users during the next period, 0), the maximum assigned bandwidths of the respective cells during the next period may be calculated as follows.

The maximum assigned bandwidth of the 4G DSS cell 1 (belonging to the 20M DSS cell 1) during the next period = max (20 - 10, 0) = 10M bandwidth, which is approximately equal to 5 MBSFN subframes.

The expected assigned bandwidth of the 4G DSS cell 1 (belonging to the 20M DSS cell 1) during the next period = min (max (6 - 0, 0), max(20 - 10, 0)) = 6M bandwidth, which is approximately equal to 3 MBSFN subframes.

The maximum assigned bandwidth of the 4G DSS cell 2 (belonging to the 20M DSS cell 2) during the next period = max (20 - 12, 0)=8M bandwidth, which is approximately equal to 4 MBSFN subframes.

The expected assigned bandwidth of the 4G DSS cell 2 (belonging to the 20M DSS cell 2) during the next period = min (max (4 - 0, 0), max (20 - 12, 0))=4M bandwidth, which is approximately equal to 2 MBSFN subframes.

The expected assigned bandwidth of the 20M4G cell 1 during the next period = max (20 - 18, 0) = 2M bandwidth, which is approximately equal to 1 MBSFN subframe.

Since the expected MBSFN subframe number of the 4G DSS cell 1 during the next period is 3 subframes, which is greater than 0, a broadcast message needs to be sent to all same-frequency neighboring cells having high interference, namely, the 4G DSS cell 2 (belonging to the 20M DSS cell 2), for example, "expected to configure 3 MBSFN subframes, non-mandatory". Since the expected MBSFN subframe number of the 4G DSS cell 2 during the next period is 2 subframes, which is greater than 0, a broadcast message needs to be sent to all same-frequency neighboring cells having high interference, namely, the 4G DSS cell 1 (belonging to the 20M DSS cell 1) and the 20M4G cell 1, for example, "expected to configure 2 MBSFN subframes, non-mandatory".

S4, after receiving broadcast messages from neighboring cells within a designated time window, determining and executing, by the 4G cell or 4G DSS cell, the configuration of the serving cell during the next period.

The configuration during the next period is the MBSFN configuration, that is, calculating a target allocation subframe number for the MBSFN service, which may specifically refer to Formula 6, namely: max (min (maximum subframe number of MBSFN during the next period of the serving cell, max (expected subframe number of MBSFN during the next period of the serving cell, max (received "non-mandatory" expected subframe number of MBSFN during the next period from neighboring cells))), max (received "mandatory" expected subframe number of MBSFN during the next period from neighboring cells))).

With reference to FIG. 6, the target allocation subframe number of the 4G DSS cell 1 (belonging to the 20M DSS cell 1) = max (min (5, max(3, max (2))), max (0))=3 MBSFN subframes.

The target allocation subframe number of the 4G DSS cell 2 (belonging to the 20M DSS cell 2) = max (min (4, max (2, max (3))), max (0))=3 MBSFN subframes.

The target allocation subframe number of the 20M4G cell 1 = max (min (1, max (0, max (2))), max (0))=1 MBSFN subframe.

After the calculation is completed, the above cells perform MBSFN configuration operations during the next period according to the above calculation results.

The MBSFN configuration order may be required to be 1, 3, 6, 8, 2, and 7 (in an FDD system, subframes 0, 4, 5, and 9 are not allowed to be configured, and in a TDD system, subframes 0, 1, 5, and 6 are not allowed to be configured; the FDD system is taken as an example herein). Therefore, the two 4G DSS cells configure subframes 1, 3, and 6 as MBSFN subframes, and the 20M4G cell configures subframe 1 as the MBSFN subframe.

S5, performing, by the 5G DSS cell or the 5G cell, an automatic interference avoidance operation.

The 5G DSS cell or the 5G cell configures CSI-IMs of four consecutive REs on one symbol where the 4G CRS is located in the 4G/5G shared spectrum, such that 5G users may periodically report interference measurement results including subbands (the subband refers to a spectrum range covered by the CSI-IMs of four consecutive REs configured by the 5G DSS cell or the 5G cell on one symbol where the 4G CRS is located in the 4G/5G shared spectrum). The 5G DSS cell or the 5G cell determines, based on the interference measurement results reported by the 5G users in combination with a frequency selection strategy, how the users use shared spectrum RB resources. Since the above-configured CSI-IMs may measure both 4G CRS interference and 4G/5G PDSCH interference from all same-frequency neighboring cells, if relatively strong interference still exists on partial RBs at a location of a 5G user, the RB resources allocated to the 5G user may avoid such RBs, thereby eliminating interference.

For example, the 5G DSS cells 1 and 2 may both configure CSI-IMs of four consecutive REs on the symbol 11 of the 10M4G and 5G shared spectrum for interference measurement. The LTE CRS is generally distributed on symbols 0, 4, 7, and 11 (the symbols are not illustrated).

As shown in FIG. 5, the 5G DSS cell 1 (belonging to the 20M DSS cell 1) and same-frequency neighboring cells all configure MBSFN subframes over the entire 20M bandwidth in subframes 1, 3, and 6. Therefore, 5G users at all locations in the 5G DSS cell 1 are unlikely to detect strong interference in subframes 1, 3, and 6, and are likely to detect strong interference only in other subframes. Accordingly, these 5G users may enjoy approximately 6M of clean spectrum bandwidth, thereby sufficiently satisfying their service requirements.

However, for the 5G DSS cell 2 (belonging to the 20M DSS cell 2), the same-frequency neighboring cell 20M4G cell 1 on the right side only configures an MBSFN subframe in the subframe 1. Therefore, 5G users in the overlapping coverage region between the 5G DSS cell 2 and the 20M4G cell 1 (for example, the crying-face region shown in FIG. 6) are unlikely to detect strong interference only in the subframe 1, while strong interference is likely to be detected in the other nine subframes. Accordingly, these 5G users may only enjoy 2M of clean spectrum bandwidth.

Further, for the 5G users in the 5G DSS cell 2 (belonging to the 20M DSS cell 2) that are not located in the overlapping coverage region with the 20M4G cell 1 (for example, the smiling-face region of the 5G DSS cell 2 shown in FIG. 6), strong interference is still unlikely to be detected in subframes 1, 3, and 6. Therefore, these 5G users may all enjoy approximately 6M of clean spectrum bandwidth, thereby sufficiently satisfying their service requirements.

That is, according to the above calculation results, it can be seen that the MBSFN target allocation subframe number 1 of the 20M4G cell 1 is smaller than the MBSFN target allocation subframe number 3 of the 4G DSS cell 2 (belonging to the 20M DSS cell 2). Therefore, the 20M4G cell 1 may be regarded as an interference cell of the 4G DSS cell 2.

As shown in FIG. 6, the 4G bandwidth (that is, the second network configuration total number) of the 20M4G cell 1 is 20M, and the 4G requirement is 18M. Accordingly, the 4G allocation number of the 20M4G cell 1 during a next period is 2M, and the interference resource caused by the 20M4G cell 1 to the 4G DSS cell 2 is 18M. Therefore, it may be determined that the effective resource in the overlapping coverage region between the 20M4G cell 1 and the 4G DSS cell 2 (for example, the crying-face region shown in FIG. 6) is 2M. Accordingly, the 5G users in the crying-face region shown in FIG. 6 on the 5G DSS cell 2 may only enjoy 2M of clean spectrum bandwidth, that is, 2M of clean spectrum bandwidth (namely, the effective resource) is allocated to the 5G users (namely, the first network users) located in the overlapping region between the 5G DSS cell 2 (namely, the target cell) and the 20M4G cell 1 (namely, the interference cell).

For the 5G users in the 20M DSS cell 2 that are not located in the overlapping coverage region with the 20M4G cell 1 (for example, the smiling-face region of the 5G DSS cell 2 shown in FIG. 6), allocation may be selected from the interference resource of 18M or the effective resource of 2M.

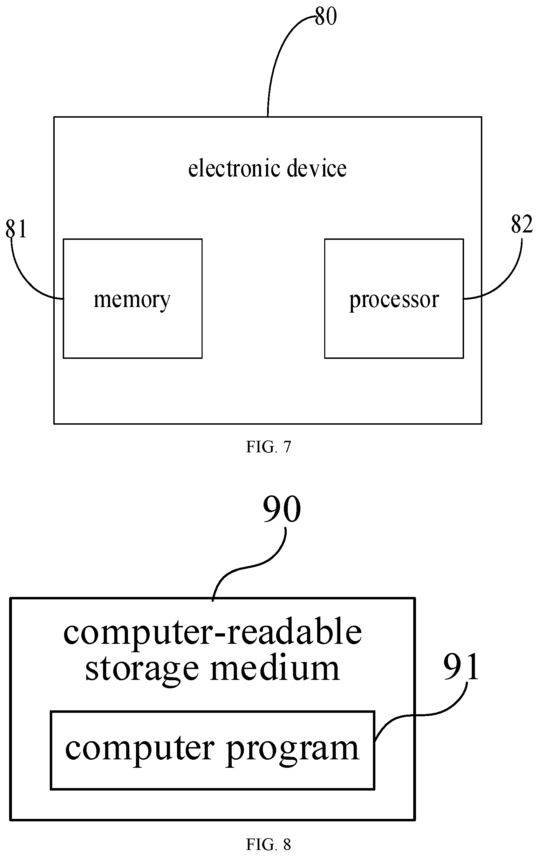

As shown in FIG. 7, FIG. 7 is a schematic structural diagram of an electronic device according to an embodiment of the present application. The electronic device 80 includes a memory 81 and a processor 82. A computer program is stored in the memory 81. The processor 82 is configured to implement the method for coordinating interference in a cell network as mentioned in any one of the foregoing embodiments when executing the computer program.

As shown in FIG. 8, FIG. 8 is a schematic structural diagram of a computer-readable storage medium according to an embodiment of the present application. The computer-readable storage medium 90 is configured to store a computer program 91. When executed by a processor, the computer program 91 is configured to implement the following steps:
obtaining a target allocation number allocated during a preset period by a second network of a second sub-region to a first network of a first sub-region in a target cell of a target spectrum sharing cell during the preset period; and obtaining a second network allocation number of each neighboring cell of the target spectrum sharing cell during the preset period;
in response to that the second network allocation number of any neighboring cell among the neighboring cells is smaller than the target allocation number, determining the neighboring cell as an interference cell;
determining an effective resource of an overlapping region between the target cell of the target spectrum sharing cell and the interference cell;
allocating the effective resource to first network users located in the overlapping region between the target cell of the target spectrum sharing cell and the interference cell.

It may be understood that,
when executed by the processor, the computer program 91 is further configured to implement the technical solutions in any embodiment of the present application.

In several embodiments in the present application, it should be understood that the disclosed methods and devices may be implemented in other manners. For example, the device embodiments described above are merely illustrative. For instance, the division of the modules or units is merely a logical functional division, and other divisions may be adopted in actual implementation. For example, multiple units or components may be combined or integrated into another system, or some features may be omitted or not performed.

The units described as separate components may be or may not be physically separate, and the components shown as units may be or may not be physical units, that is, they may be located in one place or distributed among multiple network units. Some or all of the units may be selected according to actual needs to achieve the objectives of the solutions of the embodiments.

In addition, functional units in the embodiments of the present application may be integrated into one processing unit, or each unit may exist physically alone, or two or more units may be integrated into one unit. The integrated unit may be implemented in the form of hardware, or may be implemented in the form of software functional units.

When the integrated unit is implemented in the form of a software functional unit and sold or used as an independent product, the integrated unit may be stored in a computer-readable storage medium. Based on such understanding, the technical solutions of the present application, or the portion contributing to the related art, or all or part of the technical solutions, may be embodied in the form of a software product. The computer software product is stored in a storage medium and includes a plurality of instructions for causing a computer device (which may be a personal computer, a server, or a network device, and the like) or a processor to perform all or part of the steps of the methods according to the embodiments of the present application. The aforementioned storage medium includes various media capable of storing program codes, such as the USB flash disk, a removable hard disk, a read-only memory (ROM), a random-access memory (RAM), a magnetic disk, or an optical disc.

The above are only some embodiments of the present application, and do not limit the scope of the present application thereto. Under the concept of the present application, any equivalent structural transformation or equivalent process transformation made according to the description and drawings of the present application, or direct/indirect applied in other related technical fields shall fall within the claimed scope of the present application.

## Claims

1. A method for coordinating interference in a cell network, **characterized in that**, a target cell comprises a first network and a second network; the method comprises:
obtaining a target allocation number allocated by the second network to the first network of the target cell during a preset period, a second network allocation number of each neighboring cell of the target cell during the preset period;
in response to that the second network allocation number of any neighboring cell among neighboring cells is less than the target allocation number, determining a neighboring cell as an interference cell;
determining an effective resource in an overlapping region between the target cell and the interference cell; and
allocating the effective resource to a first network user in the overlapping region between the target cell and the interference cell.

2. The method according to claim 1, wherein obtaining the target allocation number allocated by the second network to the first network of the target cell during the preset period comprises:
obtaining a maximum assigned bandwidth, an expected assigned bandwidth of the target cell during the preset period, and an expected assigned bandwidth of the neighboring cell during the preset period; and
determining the target allocation number of the target cell during the preset period based on the maximum assigned bandwidth and the expected assigned bandwidth of the target cell during the preset period, and the expected assigned bandwidth of the neighboring cell during the preset period.

3. The method according to claim 2, wherein an interference coordination system supports a preset service configuration, and determining the target allocation number of the target cell during the preset period based on the maximum assigned bandwidth and the expected assigned bandwidth of the target cell during the preset period, and the expected assigned bandwidth of the neighboring cell during the preset period comprises:
converting the maximum assigned bandwidth and the expected assigned bandwidth of the target cell during the preset period into a maximum subframe number and an expected subframe number corresponding to a preset service of the target cell;
converting the expected assigned bandwidth of the neighboring cell during the preset period into the expected subframe number corresponding to the preset service of the neighboring cell; and
based on the maximum subframe number and the expected subframe number corresponding to the preset service of the target cell during the preset period, and the expected subframe number corresponding to the preset service of the neighboring cell during the preset period, determining a target allocation subframe number corresponding to the preset service of the target cell during the preset period.

4. The method according to claim 2, wherein an interference coordination system supports a preset reference signal configuration, and determining the target allocation number of the target cell during the preset period based on the maximum assigned bandwidth and the expected assigned bandwidth of the target cell during the preset period, and the expected assigned bandwidth of the neighboring cell during the preset period comprises:
converting the maximum assigned bandwidth and the expected assigned bandwidth of the target cell during the preset period into a maximum resource number and an expected resource number corresponding to a preset reference signal of the target cell, respectively;
converting the expected assigned bandwidth of the neighboring cell during the preset period into an expected resource number corresponding to the preset reference signal of the neighboring cell; and
determining a target resource number of the preset reference signal of the target cell based on the maximum resource number and the expected resource number corresponding to the preset reference signal of the target cell, and the expected resource number corresponding to the preset reference signal of the neighboring cell.

5. The method according to claim 2, wherein an interference coordination system simultaneously supports a preset service configuration and a preset reference signal configuration; the method comprises:
converting the maximum assigned bandwidth and the expected assigned bandwidth of the target cell during the preset period into a subframe number corresponding to the preset service, and rounding down to obtain a remaining maximum assigned bandwidth and a remaining expected assigned bandwidth; and
converting the remaining maximum assigned bandwidth and the remaining expected assigned bandwidth into a resource number corresponding to the preset reference signal; integrating an allocation method of the preset service configuration and an allocation method of the preset reference signal configuration within a same network.

6. The method according to claim 3, wherein based on the maximum subframe number and the expected subframe number corresponding to the preset service of the target cell during the preset period, and the expected subframe number corresponding to the preset service of the neighboring cell during the preset period, determining the target allocation subframe number corresponding to the preset service of the target cell during the preset period comprises:
selecting a larger subframe number among the expected subframe number of the target cell during the preset period and the expected subframe number of the neighboring cell during the preset period as a target expected subframe number; and
selecting a smaller subframe number among the target expected subframe number and the maximum subframe number of the target cell during the preset period as a target allocation subframe number corresponding to the preset service of the target cell during the preset period.

7. The method according to claim 2, wherein obtaining the maximum assigned bandwidth of the target cell during the preset period comprises:
obtaining a configuration bandwidth of the second network and an expected bandwidth of a second network user during the preset period; and
obtaining the maximum assigned bandwidth of the target cell during the preset period based on a difference value between the configuration bandwidth of the second network and the expected bandwidth of the second network user during the preset period.

8. The method according to claim 2, wherein obtaining the expected assigned bandwidth of the target cell during the preset period comprises:
obtaining an expected bandwidth and a first dedicated network bandwidth of a first network user during the preset period;
determining a difference value between the expected bandwidth and the first dedicated network bandwidth of the first network user during the preset period; and
based on the difference value between the expected bandwidth and the first dedicated network bandwidth of the first network user during the preset period, and the maximum assigned bandwidth of the target cell during the preset period, obtaining the expected assigned bandwidth of the target cell during the preset period.

9. The method according to claim 1, wherein determining the effective resource of the overlapping region between the target cell and the interference cell comprises:
obtaining an interference resource from the interference cell to the target cell based on a second network allocation number and a second network configuration total number of the interference cell; and
excluding the interference resource from a configuration bandwidth of the second network of the target cell to obtain the effective resource of the overlapping region between the target cell and the interference cell.

10. The method according to claim 8, further comprising:
allocating the interference resource and/or the effective resource to the first network user within a non-overlapping region between the target cell and the interference cell.

11. The method according to claim 1, wherein obtaining the second network allocation number of each neighboring cell of the target cell comprises:
in response to that an expected bandwidth of the target cell during the preset period is greater than zero, sending mandatory and/or non-mandatory expected bandwidth broadcast information to each neighboring cell of the target cell; and
within a preset time, receiving a corresponding second network allocation number determined and fed back by each neighboring cell based on the broadcast information.
